# EUROPEAN PATENT APPLICATION

(11) **EP 1 077 335 A1**
(43) Date of publication of application: **21.02.2001**
(21) Application number: 00307150.3
(22) Date of filing: 21.08.2000
(51) Int. Cl.: F16F 15/305

(54) **Flywheel hub-to-trim coupling**

(30) Priority: 19.08.1999 US 149945 P
(71) Applicant: Toray Composites (America), Inc., Tacoma, WA 98446 (US)
(72) Inventor: Gabrys, Christopher W., Federal Way, WA 98023 (US); Simmons, Dennis G., Puyallup, WA 98375 (US)
(74) Representative: Coleiro, Raymond

(57) **Abstract**

A flywheel rotor (30) includes an annular rim (40,45) mounted for high speed rotation on a flywheel hub (35). The hub (35) has radially extending projections, such as splines (70), or radially extending slots, such as spline grooves (75) on the exterior surface facing radially outwards. The rim (40,45) includes an annular rim liner (45) having an axis of rotation coinciding with the axis of rotation of the hub (35), and having radially extending slots, such as spline grooves (82) or radially extending projections, such as splines (80), on the inner surface facing radially inward. The rim liner splines (80) and spline grooves (82) mate with the hub spline grooves (75) and splines (70) respectively. The flywheel rim liner (45) may have a modulus of elasticity E₁ in the circumferential hoop direction and a density ρ₁, and a liner ratio R₁ equal to E₁/ρ₁. The flywheel rim (40) may have an average modulus of elasticity Eᵣ in the circumferential hoop direction and a density ρᵣ; and a rim ratio Rᵣ equal to Eᵣ/ρᵣ. The materials and configuration of the rim (40) and rim liner (45) may be designed so that R₁ is less than or equal to Rᵣ, so that on rotation of the flywheel (30), the flywheel rim liner (45) grows radially with the rim (40).

## Description

This invention pertains to high speed composite flywheels, flywheel rotors and flywheel rims in a flywheel system provided with a flywheel hub-to-rim coupling that accommodates radial growth of the flywheel rim in operation without decoupling from the hub.

Flywheel systems have been used for many years for storing energy in the systems, and then releasing that stored energy back into other systems. They provide a smoothing effect for internal combustion engines and many kinds of power equipment. More recently, modern flywheel systems have become recognized as very attractive energy storage systems in electrical applications such as uninterruptible power supplies, utility load levelling, electric vehicles and battery replacement.

Modern flywheel systems used for storage of electrical energy, in the form of mechanical rotational inertial converted from electrical energy, include a flywheel hub and rim (known jointly as a "flywheel rotor"), and a rotor and stator on the hub shaft that function as an electric motor during storage of electrical energy and as a generator during regeneration of electrical energy when the stored energy is to be reapplied into the system. The flywheel system is normally contained in a vacuum enclosure that protects it from windage losses that would occur from operation in a gas atmosphere, and provides ballistic protection against catastrophic failure of a flywheel rotating at high speed.

The flywheel rim usually comprises a composite ring made of resin-impregnated filaments wound in the hoop direction. The rim can be made of one or multiple types of fibre in a concentric ring arrangement. Flywheel designs utilising multiple fibres typically have the lowest modulus fibres disposed radially innermost and the higher modulus fibres disposed radially outermost. One example would be to use an E-glass/epoxy ring concentrically within a carbon/epoxy ring. Placing the lower modulus fibres radially inwardly produces a more favourable stress distribution in the composite rim. The less stiff inner ring tends to grow radially under the centrifugal loading more than does the outer ring. Therefore, a component of radial compressive stress is generated as the inner ring grows into the outer ring. This compression tends to counteract the radial tensile stresses generated in isolated rings under centrifugal loading.

To minimise the cost of the complete rotor, it would be desirable to use the lowest cost fibres to make the composite rim. The current price per pound of E-glass fibre is roughly one tenth of the per pound price of standard modulus carbon fibre. Intermediate and high modulus carbon fibres increase significantly in price with elastic modulus to approximately five hundred times the per pound price of E-glass fibre. A rim utilising mostly E-glass would be the most economical, but such a rim would experience a large strain of its inner diameter when spinning due to the low elastic modulus and a high strain to failure of approximately 2.5%. This large strain would make the development of a strain matching hub very difficult.

The prior methods for designing hubs that can handle both the large radial growth of the inside diameter of the composite rim and the high centrifugal loads generated from high speed rotation can be classified into two categories: strain matching and sliding joint hubs. Several schemes can be used to employ strain matching hubs with composite rim flywheels. One method is to use a simple metallic cylinder for a hub. This type of hub can handle the centrifugal forces from high speed rotation; however the growth of the outer diameter is very small. Therefore, the composite rim must be made of high modulus carbon fibre or made of multiple intermediate modulus carbon fibre rings that are press-fit together. Press-fitting allows a much radially thicker rim to be used so that the interface diameter between the rim and hub can be made much smaller and the resulting hoop strain on the composite rim liner diameter is also much smaller. Both of these strain-matching methods are expensive either because of use of very expensive high modulus carbon fibres or because of excessive and inefficient use of intermediate modulus carbon fibre.

Another method for strain matching hubs is to use hubs with curved spokes. These spokes allow large deflections through bending and can match the strain on the inner diameter of composite rims made of both glass and carbon fibre combined. Many such designs have been previously designed and patented. The problem with these types of hubs is that they also require excess carbon fibre in the rim to limit the rim strain because the strain of the hub outer diameter, although greater than a solid cylinder, is still limited. These hubs also require complicated machining and can suffer from fatigue problems due to the high stresses in the areas where bending is occurring.

The second category of flywheel hubs, those that use sliding joints, have been used in high speed rotating equipment either through the use of roll pins that are radially oriented or through spline connections. Both radial roll pins and straight sided splines allow a shaft or hub to transmit torque to and from the flywheel rim while eliminating radial stresses at the joint and accounting for a difference in growth due to spinning. Because pins or spline teeth are radially oriented, the flywheel rim is kept in the centre location of the shaft/hub even when there is a difference in growth. This method works well when both the shaft/hub and the flywheel rim are made of metal. However, a problem arises when using this type of hub mechanism for low cost filament wound composite rims: radial holes cannot be drilled into the composite for placement of pins because this would unacceptably weaken the rim. Likewise, spline teeth could not be cut into the composite rim, for the same reason.

Accordingly, this invention addresses the problem of providing a flywheel system having a composite flywheel rim that allows for use of low modulus, low cost fibre that has high radial growth of the inside diameter of the rim.

According to a first aspect, the invention provides a flywheel rotor comprising
a flywheel hub;
a rim concentric with and disposed radially outwardly of the hub which comprises
a rim body of a composite material and
a rim liner secured to and disposed radially within the rim body and concentric with each of the flywheel hub and the rim body; and
coupling means between the flywheel hub and the rim liner to allow torque transmitting coupling therebetween while simultaneously, on rotation of the flywheel rotor, (1) maintaining concentricity between the hub and the rim liner and (2) allowing radial growth of the rim liner relative to the hub.

Preferably, the coupling means is such as to allow, on rotation of the flywheel rotor, at least one of
(i) sliding, in a radial direction, of at least one of the hub and the rim liner relative to the other of the hub and the rim liner; and
(ii) expansion or compression, at least in a radial direction, of at least one of the hub and the rim liner relative to the other of the hub and rim liner.

According to a second aspect, the invention provides a process of coupling a flywheel rim to a flywheel hub to provide a flywheel rotor, comprising the steps of:
(a) coupling a rim liner to the hub with torque coupling means that allows the rim liner to grow radially with respect to the hub while remaining concentric therewith during rotation of the flywheel rotor; and
(b) mounting a rim body on the rim liner;
either of which steps (a) and (b) may be carried out prior or subsequently to the other.

For some preferred flywheel rotors it is more practical to perform step (a) before step (b).

Preferably, the coupling step includes engaging a plurality of radial projections spaced apart circumferentially around one of the rim liner and the hub in radial slots spaced apart circumferentially in the other of the rim liner and the hub.

According to a third aspect, the invention provides a flywheel system comprising a flywheel rotor as defined above, in a vacuum chamber.

According to a fourth aspect, the invention provides a flywheel rim having an annular transverse cross-section and comprising a radially outer rim body of a resin material reinforced by fibres extending in a generally circumferential direction relative to the rim body; and
a radially inner rim liner concentric with and secured to the rim body;
which rim liner has an average modulus of elasticity Eₗ in the circumferential hoop direction less than or equal to the modulus of elasticity Eᵣ of the resin body in the circumferential hoop direction.

The composite material of the rim body is preferably a fibre-reinforced resin material, preferably a thermoset resin material, reinforcing fibres of which composite material preferably extend in a circumferential direction relative to the rim. The reinforcing fibres may be provided by at least one continuous helically wound fibre tow. Typically, the rim body comprises an inner layer of glass/epoxy resin, especially E-glass/epoxy resin, and an outer layer of carbon fibre/epoxy resin, each of an annular transverse cross-section.

Typically, a rim body may be prepared by filament winding technology, in particular by winding a fibre tow helically around a mandrel, impregnating the tow with liquid resin and then curing the resin. After curing, the mandrel is removed. Usually, the fibre tow is wound around the mandrel to provide a helix of constant pitch, with the tow lying at a certain angle relative to the mandrel axis.

Preferably, the radial thickness of the outer annular layer is less than the radial thickness of the inner annular layer and more preferably the ratio of the radial thickness of the outer annular layer to the radial thickness of the inner annular layer is from 1:1 to 1:4.

The respective materials of the rim body and rim liner are preferably such that the rim body has an average modulus of elasticity Eᵣ in the circumferential hoop direction; and the rim liner has a modulus of elasticity Eₗ in the circumferential hoop direction and Eₗ is equal to or smaller than E_{r.}

In an especially preferred rim for use in a flywheel rotor embodying the invention, the rim body has an average modulus of elasticity Eᵣ in the circumferential hoop direction and a density ρᵣ; and a rim ratio Rᵣ equal to Eᵣ/ρᵣ; and the rim liner has a modulus of elasticity Eₗ in the circumferential hoop direction and a density ρₗ; and a rim liner ratio equal to Eₗ/ρₗ; and Rₗ is less than or equal to Rᵣ, whereby, on rotation of the flywheel rotor, the rim liner is capable of growth radially with the resin body.

The rim liner may be made of, for example, plastics material, such as a polyamide (e.g. nylon) or polyvinyl chloride (PVC), or brass.

The rim liner preferably has a strain-to-failure capability of at least 4%.

The rim liner may be attached or secured to, or more preferably integral with, the rim body.

According to a fifth aspect, the invention provides a torque transmitting device for incorporation into a flywheel rotor comprising a hub and a rim, which device comprises
a flywheel hub;
a rim liner; and
coupling means between the flywheel hub and the rim liner to allow torque transmitting couple therebetween while simultaneously, on rotation of the flywheel rotor, maintaining concentricity between the hub and the rim liner and allowing radial growth of the rim liner relative to the hub.

In such a device, and in a flywheel rotor, embodying the invention, the coupling means preferably comprises (1) a plurality of projections extending radially from one of the outer circumferential surface of the hub and the inner circumferential surface of the rim liner, cooperable with (2) a plurality of corresponding radially extending slots in the other of the outer circumferential surface of the hub and the inner circumferential surface of the rim liner.

The projections may be pins and the slots recesses adapted to receive the pins. The pins may be set in the rim liner, for examples in recesses adaptable to receive pinheads and extend radially inwardly from the inner circumferential surface of the rim liner into corresponding pin-holes in the outer circumferential surface of the hub.

Alternatively, the projections may be axially extending splines spaced apart circumferentially around one of the outer circumferential surface of the hub and the inner circumferential surface of the rim liner so as to define spline teeth and the slots are grooves in the other of the outer circumferential surface of the hub and the inner circumferential surface of the rim liner so as to define corresponding spline grooves into which the spline teeth project.

Preferably, the spline teeth and grooves are continuous in the axial direction.

The spline teeth may be integral with the rim liner and such spline teeth of the rim liner preferably have a Poisson's ratio which allows the teeth on rotation of the flywheel, to be compressed under their own centrifugal loading so as to provide a widening of the teeth, thereby tightening the coupling connection between the rim liner and the hub. In particular, the Poisson's ratio of at least the teeth of the rim liner is preferably higher than that of the hub.

Alternatively, the spline teeth may be integral with the hub.

In a preferred coupling means embodying the invention, such as a coupling means having spline teeth cooperable with spline grooves, the rim liner radially inside the flywheel rim provides half of a sliding joint with the hub to be attached to the composite rim, thus allowing relative sliding in a radial direction.

Moreover, particular when the coupling device has splines cooperable with spline grooves, these may also allow the hub and rim liner to be coupled together by axial sliding of the hub with the rim liner or of the rim liner around the hub.

Preferred embodiments of the invention will now be described in more detail with reference to the accompanying drawings in which
Fig.1 is a schematic sectional elevation of a flywheel rotor embodying this invention, in which the coupling means comprises splines on a rim liner which mate with corresponding spline teeth on the hub periphery;
Fig.lA is a schematic sectional elevation of a flywheel rotor embodying the invention similar to that of Fig.1, but in which the coupling means comprises pins in holes provided in the liner, which pins match pin holes in the hub periphery;
Fig.2 is an elevation of the flywheel hub shown in Fig.1;
Fig.3 is a plan view of the flywheel hub shown in Fig.2;
Fig.4 is an enlarged plan view of a flywheel rim liner for use with the flywheel hub shown in Figs.1-3;
Fig.5 is a sectional elevation of a variant of the hub in accordance with this invention, having a stepped lip for supporting the rim and rim liner;
Fig.6 is a sectional elevation of the hub shown in Fig.5 with a rim and rim liner mounted on the hub;
Fig.7A is a radial stress plot for a flywheel liner and rim using a rim with mostly carbon fibre/epoxy material;
Fig.7B is a hoop stress plot for a flywheel liner and rim using a rim with mostly carbon fibre/epoxy material;
Fig.8A is a radial stress plot for a flywheel liner and rim using a rim with about equal amounts of E-glass fibre and carbon fibre/epoxy material;
Fig.8B is a hoop stress plot for a flywheel liner and rim using a rim with about equal amounts of E-glass and carbon fibre/epoxy material;
Fig.9A is a radial stress plot for a flywheel liner and rim using a rim with mostly E-glass material;
Fig.9B is a hoop stress plot for a flywheel liner and rim using a rim with mostly E-glass material; and
Fig.10 is a plot of hoop factors of safety for E-glass fibre and carbon fibre vs.interface diameter between the E-glass annulus and the carbon fibre annulus in a flywheel rim, showing the regions of safe designs for these particular materials as used in a flywheel of this invention.

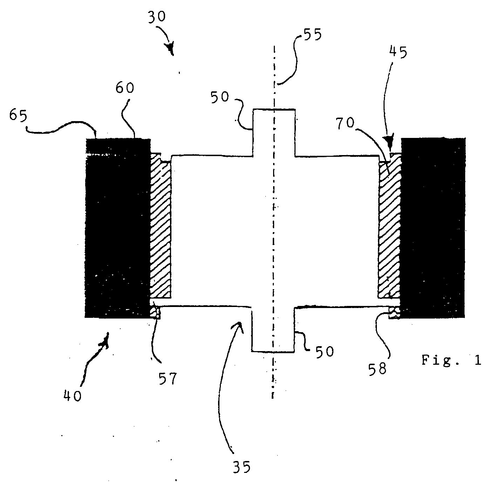

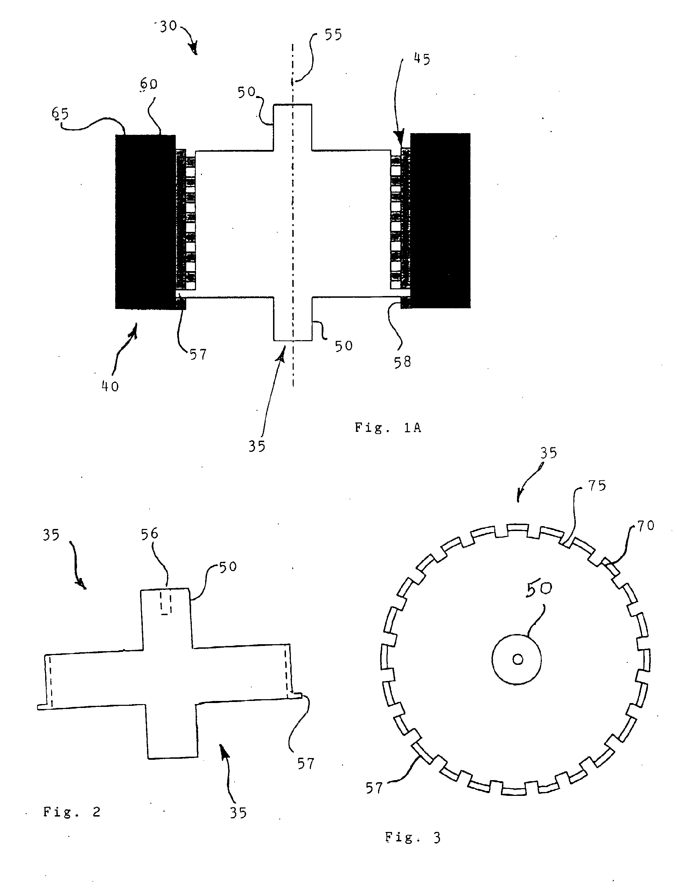

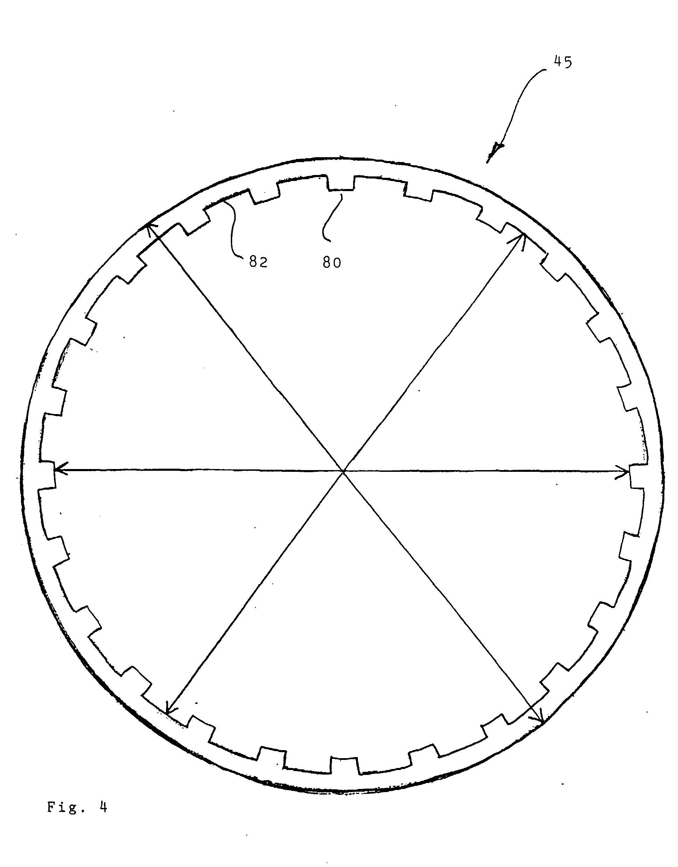

Turning now to the drawings, wherein like reference characters designate identical or corresponding parts, and more particularly to Fig.1 thereof, a flywheel rotor 30 is shown having a hub 35, shown in Figs.2 and 3, and a rim body 40 mounted on the hub 35 by way of a rim liner 45, shown in Fig.4. The hub 35, has a pair of stub shafts 50 projecting axially along an axis of rotation 55 for journalling the hub 35 for high speed rotation in magnetic bearings within a vacuum chamber and ballistic container (not shown) . An axial bore 56 may be provided for a quill shaft (not shown) for coupling to other elements in the flywheel system, as is known in the art. Other structures for supporting the hub 35 in the vacuum chamber for high speed rotation can also be used, as is well known in the flywheel industry. An electric motor/alternator is coupled to the hub 35 for initially driving the flywheel up to speed, and then recovering the energy, stored in the flywheel as rotational inertia, by converting it back to electrical energy in the alternator. A separate motor and generator may also be used, as is known in the art.

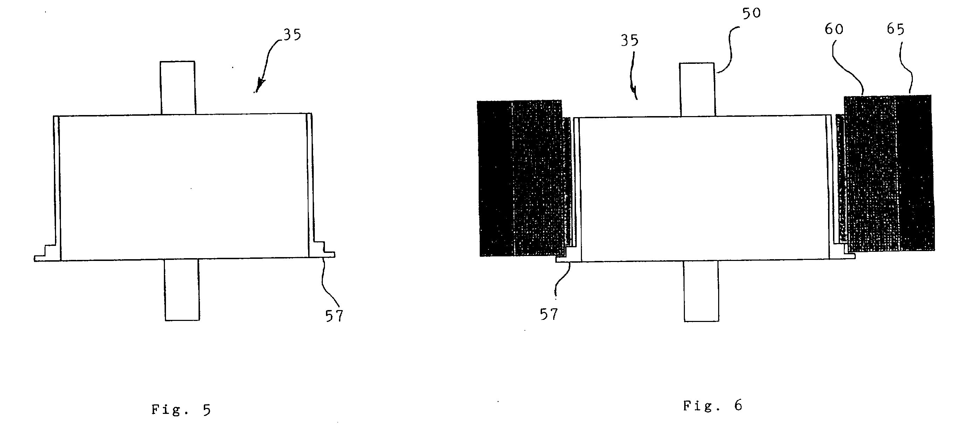

The hub 35 is usually made of metal (and may be solid and/or hollow), especially high strength 4340 normalized steel, although other materials such as aluminum could be used, as known in the art. The steel hub has an advantage over aluminum of high density, providing a significant amount of energy storage in the hub itself within suitable safety margins of rotational speed for the particular hub diameter, so the centrifugal forces generated in the hub remain within the strength range of the hub material. An outwardly projecting lip 57 is provided at the lower edge of the hub 35 for supporting the rim body 40 and the rim body 40 is locked to the hub 35 with a locking ring 58. As shown in Figs.5 and 6, the hub 35 may be provided with a stepped lip 57 to facilitate assembly, as discussed in more detail below.

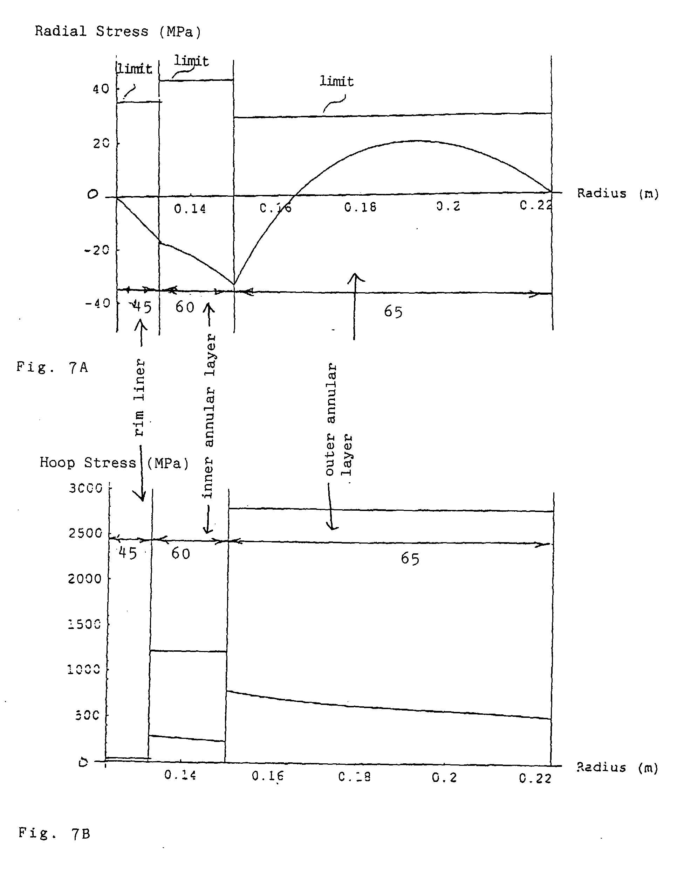

The flywheel rim body 40 is a biannular hoop-wound or helically-wound construction having an inner winding 60 of low cost E-glass fibre, and an outer winding 65 of carbon fibre, each embedded in an epoxy resin. Such biannular rims are known in the prior art, but typically such prior art flywheel rims require a relatively thick layer of carbon fibre to constrain the radial strain of the flywheel rim so that it does not grow away from and detach from the outer diameter of hub. However, such prior art rims with a thick annular layer or ring of carbon fibre are expensive because of the large amount of carbon fibre required. Also, as indicated in Fig.7A, they are potentially vulnerable to radical delamination on circumferential planes in the medial radial region because of radial tensile stress within the ring by virtue of the differential radial strain caused by greater centrifugal forces acting at the outer diameter than the inner diameter of the ring. Of course, the hoop stress is well within the limits of the material, as shown in Fig.7B, since the thickness of the carbon fibre annulus is chosen for radial stiffness to prevent growth away from the hub rather than for hoop strength. Thus, the thick carbon fibre ring represents an inefficient use of materials because the hoop stress capacity of the carbon fibre ring 65 is grossly underutilised.

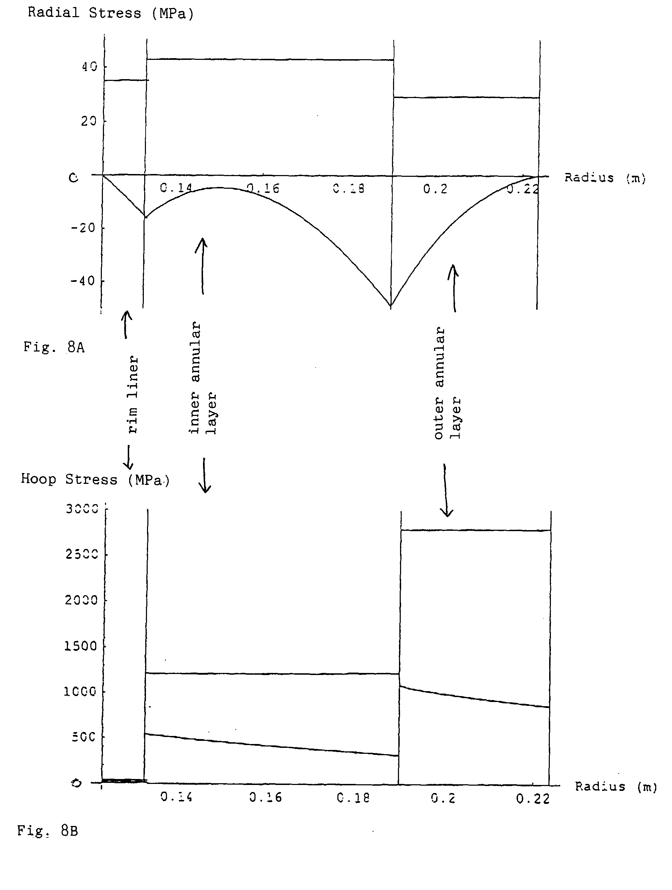

This invention allows the use of a relatively high percentage of low-cost E-glass fibre and a commensurate low percentage of costly carbon fibre, or even 100% E-glass fibre in a lower speed economy version. At high rotational speed, the low modulus E-glass fibre is capable of expansion of as much as 2.5% and the centrifugal loading of the E-glass fibre ring 60 produces compressive loading against the carbon fibre winding 65, eliminating radial tensile stresses in the E-glass fibre ring 60 altogether and compressively loading the carbon fibre ring 65, as shown in Fig.8A. This makes optimal use of the high strength of the carbon fibre material and not merely its high modulus. Significantly, the smaller radial thickness of the carbon fibre ring 65 also eliminates the radial tensile stresses that exist in a thicker carbon fibre ring, as illustrated in Fig.7A, resulting in a carbon fibre ring 65 that operates entirely in compression, as illustrated in Fig.8A. Preferably, the ratio of the thickness of the outer annular layer containing carbon fibre ring 65 to the thickness of the inner annular layer containing the E-glass fibre ring 60 is from 1:1 to 1:4. This development makes it possible to design the entire rim 40 to operate entirely in compressive loading, thereby eliminate the danger of interlaminar delamination.

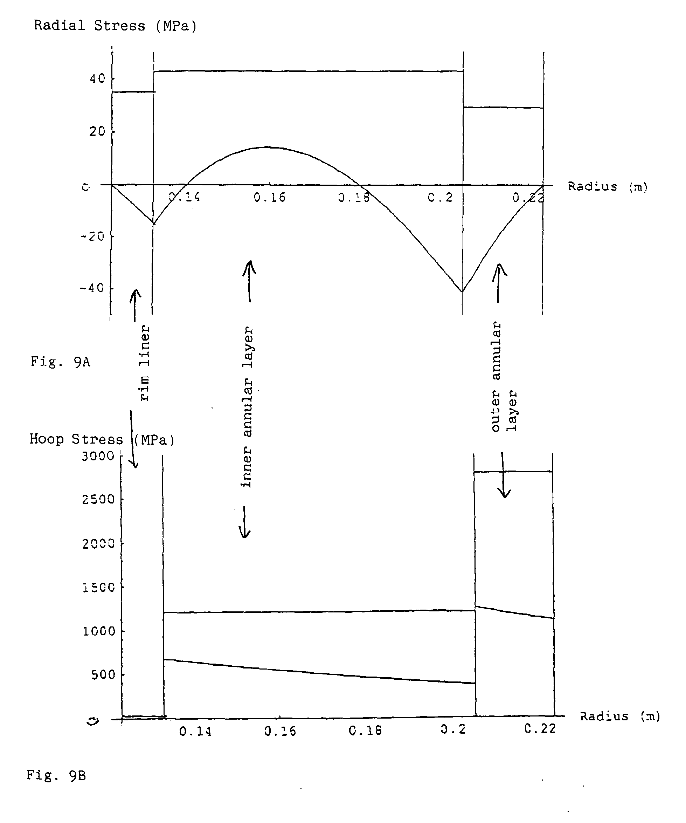

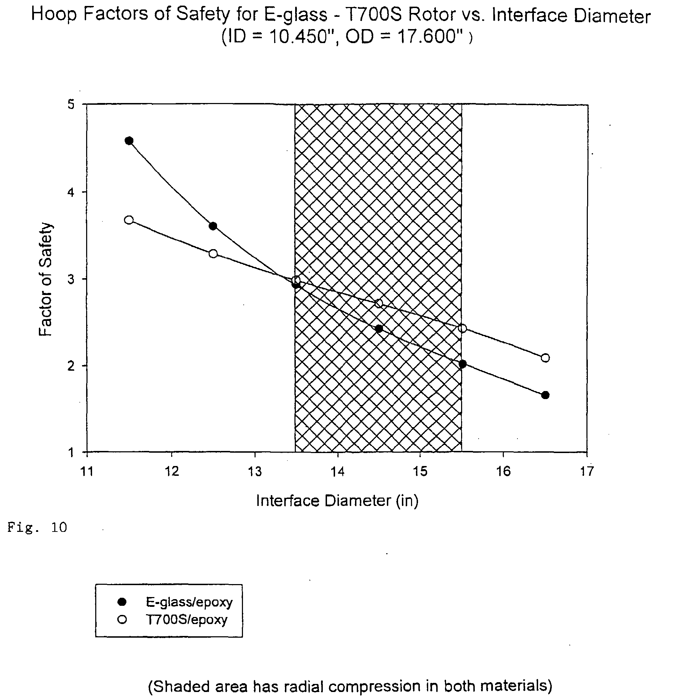

The stress plots for a flywheel rim having mostly E-glass fibre, shown in Figs.9A and 9B illustrate a region of radial tension in the E-glass fibre annulus that is within the tensile strength capacity of the epoxy resin, and shows the benefit of this invention. The percentage of carbon fibre in the flywheel represented by the plots of Figs.9A and 9B is much smaller than flywheels of the prior art ever allowed. The hoop stress in the carbon fibre is closer to the allowable limit, thereby making much better use of the strength as well as the stiffness of the costly carbon material. Fig.10 illustrates this point, showing how the safety factors of the glass and carbon fibre materials change as the interface diameter changes. The safety factors of both materials decrease as the interface diameter increases, but remain above 2 at an interface diameter of 16 inches, with both materials still in compression.

The radial strain of the rim body 40 results in a radial growth away from the hub. Therefore, a coupling between the rim body 40 and the hub 35 must be provided that allows for a differential growth in radial dimension while maintaining a torque coupling and concentricity between the hub 35 and the rim body 40.

This invention provides such a coupling between the rim body 40 and the hub 35 by way of the rim liner 45. The outer circumferential surface of the hub 35 has radially projecting, axially extending projections such as pins (Fig.1A) or splines 70 (Figs.1 and 3), equally spaced apart circumferentially by grooves or slots 75. The rim liner 45, shown in detail in Fig.4, has integral splines 80 which mesh with the grooves 75 in the hub 35, and internal slots or grooves 82 that receive the splines 70 on the hub 35 to provide torsional coupling and maintain concentricity between the rim liner 45 and the hub 35 while allowing relative radial translation therebetween. The splines 80 in the rim liner could be replaced with pins or other such projections set into cylindrical rim liner. For purposes of this description, the term "splines" is intended to encompass the illustrated splines as well as other forms of projections such as pins, shown in Fig.1, that perform the same or equivalent function. The splines 80 in the rim liner 45 and the grooves 75 in the hub could be arranged in a helical pattern to provide a more angularly continuous torsional interface between the rim liner and the hub around the circumferential interface.

The rim liner 45 is made of a material such as nylon or PVC that has an elastic modulus in the hoop direction, Eₗ (hereinafter referred to as the "hoop modulus"), selected to provide a ratio Rₗ of hoop modulus to density Eₗ/ρₗ=Rₗ that is lower than the corresponding ratio Rᵣ=Eᵣ/ρᵣ for the rim materials. For rims having several materials such as glass and carbon fibre, the ratio Rᵣ=Eᵣ/ρᵣ that should be used for the purpose of the invention is the average value calculated in accordance with the thicknesses of the respective layers. Eᵣ can be measured according to ASTM D3039. However, it is preferred that Rₗ should be less than all individual values of Rᵣ for each respective layer in the rim body 40. This relationship ensures that when the inner diameter of the rim body 40 grows radially away from the hub 35 at high rotational speeds, the rim liner grows with it.

The rim liner 45 is made from a material that has sufficient strength to transmit the torque between the hub 35 and the rim liner 45 during spin-up of the flywheel rotor and during energy recovery from the flywheel rotor, and has an elastic modulus and elongation capacity in the hoop direction that will allow the rim liner to grow with the composite rim when spun to high speed. Materials that will work have a ratio Rₗ that is equal to, more preferably lower than, the corresponding ratio for the materials of the rim body, ensuring that the rim liner grows with and stays in contact with the rim body during high speed operation. Examples include various plastics and also brass. The following table lists several candidate rim liner materials and comparison data for some materials that would not satisfy the requirement for Eᵣ

| | E (GPa) | p(kg/m³) | E/p (Gpa m³/kg) | Result |
|---|---|---|---|---|
| Steel | 210 | 7500 | 0.028 | grows<rim |
| Aluminum | 70 | 2700 | 0.026 | grows<rim |
| Brass | 97 | 8400 | 0.011 | grows=rim |
| PVC | 3 | 1420 | 0.002 | grows>rim |

If the liner were made from conventional construction materials such as steel or aluminum, the splines would work very well; however the liner itself would not grow as much as the composite rim body when spun to high speed. Therefore the rim liner could detach from the rim body. The liner would grow less than the rim body because the ratio of elastic modulus in the hoop direction to density of the liner would be too high. Even if the liner were shrunk-fit into the inside diameter of the rim body, it would decouple from the rim body before reaching the desirable operating speed.

From the table, it is clear that both brass and PVC could grow equal to or more when spun to high speed than do conventional steel and aluminum. Brass grows about the same as a low cost composite rim body and plastics such as PVC could grow more than the composite rim body. However, because a plastic rim liner 45 would be attached to or integral with the inner diameter of the rim body 40, it would be constrained by and grow the same amount as the rim body 40 when spun to high speed. This is actually beneficial because the fibre reinforced rim body 40 would then reinforce the much weaker plastic rim liner 45 and carry much of its own centrifugal loading. Of the two materials, PVC is preferred over brass because the strain-to-failure properties of brass are marginal for use in this application. Naturally, there are other materials that would satisfy the requirements noted above for the rim liner and the invention encompasses those other materials also.

As the rotor 30 is spun to high speed, the teeth or splines 80 of the rim liner 45 become compressed under their own centrifugal loading and may become wider due to their Poisson's Ratio, which is preferably higher than that of the hub material. This tightens the connection between the liner splines 80 and the hub slots 75 and helps stabilize the rotor.

The fabrication of this type of hub system is very easy. It may consist of turning and slotting a solid piece of metal or equivalent for a hub. The rim liner can be a piece of plastic or brass pipe with radial holes where pins are inserted or a single piece, with machined, cast or molded splines. An integral construction of rim and rim liner can be produced by winding the rim body 40 on the rim liner 45 and curing it in place on the rim liner 45, or by molding the rim liner 45 into the rim body 40. Alternatively, the rim liner 45 can be attached to the inside diameter of the rim body 40 by shrink fitting, pressing, or bonding. The rim body 40 and rim liner 45 attached thereto are then mounted onto the hub 35 by orienting the splines 80 on the rim liner 45 with the grooves 75 on the hub 35 and sliding the rim body 40 and rim liner 45 axially onto the hub 35. It is preferable that edge lines of the hub 35 and rim liner 45 be chamfered or radiused.

Obviously, numerous modifications and variations of the preferred embodiment described above are possible and will become apparent to those skilled in the art in light of this specification. For example, the preferred embodiment uses an inner E-glass fibre ring and an outer carbon fibre ring, but it would be possible to use this invention with all E-glass fibre to achieve a more economical flywheel that would operate at lower speed. Naturally, other rim materials exist presently and will be developed in the future and these other materials may be used while remaining within the scope of this invention.

## Claims

1. A flywheel rotor (30) comprising
a flywheel hub (35);
a rim concentric with and disposed radially outwardly of the hub (35), which rim comprises
a rim body (40) of a composite material (60,65) and
a rim liner (45) in intimate contact with and disposed radially within the rim body (40) and concentric with each of the flywheel hub (35) and the rim body; and
coupling means (70,75,80,82) between the flywheel hub (35) and the rim liner (45) to allow torque transmitting coupling therebetween while simultaneously, on rotation of the flywheel rotor (30), (1) maintaining concentricity between the hub (35) and the rim liner (45) and (2) allowing radial growth of the rim liner (45) relative to the hub (35).

2. A flywheel according to claim 1, wherein the said coupling means (70,75,80,82) is such as to allow sliding in a radial direction of at least one of the hub (35) and rim liner (45) relative to the other on rotation of the flywheel rotor (30).

3. A flywheel rotor according to claim 1 or claim 2, wherein the composite material (60,65) is a fibre-reinforced resin material.

4. A flywheel rotor (30) according to claim 3, wherein reinforcing fibres of the composite material (60,65) extend in a generally circumferential direction relative to the rim.

5. A flywheel rotor (30) according to claim 4, wherein the reinforcing fibres are provided by at least one continuous helically wound fibre tow.

6. A flywheel rotor according to claim 4 or claim 5, wherein the rim body (45) comprises an inner layer (60) of glass fibre/epoxy resin and an outer layer (65) of carbon fibre/epoxy resin, each of an annular transverse cross-section.

7. A flywheel rotor (30) according to claim 6, wherein the radial thickness of the outer annular layer (65) is less than the radial thickness of the inner annular layer (60).

8. A flywheel rotor (30) according to claim 7, wherein the ratio of the radial thickness of the outer annular layer (65) to the radial thickness of the inner annular layer (60) is from 1:1 to 1:4.

9. A flywheel rotor (30) according to any preceding claim, wherein the rim body (40) has an average modulus of elasticity Eᵣ in the circumferential hoop direction; and the rim liner (45) has a modulus of elasticity Eₗ in the circumferential hoop direction and Eₗ is equal to or smaller than Eᵣ.

10. A flywheel rotor (30) according to claim 9, wherein Eₗ is equal to or smaller than the modulus of any layer (60,65) of the rim body (40).

11. A flywheel rotor (30) according to any preceding claim, wherein the rim body (40) has an average modulus of elasticity Eᵣ in the circumferential hoop direction and a density ρᵣ; and a rim ratio Rᵣ equal to Eᵣ/ρᵣ; and the rim liner (45) has a modulus of elasticity Eₗ in the circumferential hoop direction and a density ρₗ; and a rim liner ratio equal to Eₗ/ρₗ; and Rₗ is less than or equal to Rᵣ, whereby, on rotation of the flywheel rotor (30), the rim liner (45) is capable of growth radially with the rim body (40).

12. A flywheel rotor (30) according to claim 11, wherein Rₗ is less than or equal to each value of modulus of elasticity/density for any respective layer (60,65) of the rim body (40).

13. A flywheel rotor (30) according to any preceding claim, wherein the rim liner (45) is made of plastics material or brass.

14. A flywheel rotor (30) according to claim 13, wherein the rim liner (45) is made of a plastics material which is nylon or polyvinyl chloride.

15. A flywheel rotor (30) according to any preceding claim, wherein, the rim liner (45) has a strain-to-failure capability of at least 4%.

16. A flywheel rotor (30) according to any preceding claim, wherein the coupling means (70,75,80,82) comprises (1) a plurality of projections extending radially from one of the outer circumferential surface of the hub (35) and the inner circumferential surface of the rim liner (45), cooperable with (2) a plurality of corresponding radially extending slots in the other of the outer circumferential surface of the hub (35) and the inner circumferential surface of the rim liner (45).

17. A flywheel rotor (30) according to claim 16, wherein the projections are pins and the slots are pin holes adapted to receive the pins.

18. A flywheel rotor (30) according to claim 17, wherein the pins are set in the rim liner (45) and extend radially inwardly from the inner circumferential surface of the rim liner (45) into corresponding pin holes in the outer circumferential surface of the hub (35).

19. A flywheel rotor (30) according to claim 16, wherein the projections are axially extending splines (70,80) spaced apart circumferentially around one of the outer circumferential surface of the hub (38) and the inner circumferential surface of the rim liner (45) so as to define spline teeth and the slots are spline grooves (75,82) in the other of the outer circumferential surface of the hub (35) and the inner circumferential surface of the rim liner (45) so as to define corresponding spline grooves (75,82) into which the spline teeth (70,80) project.

20. A flywheel rotor (30) according to claim 19, wherein the spline teeth (70,80) and grooves (75,82) are continuous in the axial direction.

21. A flywheel rotor (30) according to claim 19 or claim 20, wherein the spline teeth (70,80) are integral with the rim liner (45).

22. A flywheel rotor (30) according to claim 21, wherein the spline teeth (70,80) of the rim liner (45) have a Poisson's ratio which allows the teeth on rotation of the flywheel rotor (30), to be compressed under their own centrifugal loading so as to provide a widening of the teeth, thereby tightening the coupling connection between the rim liner (45) and the hub (35).

23. A flywheel rotor (30) according to claim 19 or claim 20, wherein the spline teeth (70,80) are integral with the hub (35) .

24. A flywheel rotor (30) according to claim 19, wherein the spline teeth (70,80) and grooves (75,82) are helical.

25. A flywheel rotor (30) according to any preceding claims, wherein the hub (35) has a lower radially projecting lip (57) to provide vertical support for the rim body (40) and rim liner (45).

26. A flywheel system comprising a flywheel rotor (30) according to any preceding claim, in a vacuum chamber.

27. A flywheel rim (40,45) having an annular transverse cross-section and comprising
a radially outer rim body (40) of a composite resin material (60,65) reinforced by fibres extending in a generally circumferential direction relative to the rim body (40); and
a radially inner rim liner (45) concentric with and secured to the rim body (40);
which rim liner (45) has a modulus of elasticity Eₗ in the circumferential hoop direction less than or equal to the average modulus of elasticity Eᵣ of the rim body (40) in the circumferential hoop direction.

28. A torque transmitting device for incorporation into a flywheel rotor comprising a hub and a rim, which device comprises
a flywheel hub (35);
a rim liner (45); and
coupling means between the flywheel hub (35) and the rim liner (45) to allow torque transmitting coupling therebetween while simultaneously, on rotation of the flywheel rotor, maintaining concentricity between the hub and the rim liner and allowing radial growth of the rim liner relative to the hub.

29. A process of coupling a flywheel rim (40,45) to a flywheel hub (35) to provide a flywheel rotor (30) comprising the steps of:
(a) coupling a rim liner (45) to a hub (35) with torque coupling means (70,75,80,82) that allows the rim liner (45) to grow radially with respect to the hub (35) while remaining concentric therewith during rotation of the flywheel rotor (30); and
(b) a rim body (40)(45) on the rim liner;
either of which steps (a) and (b) may be carried out prior or subsequently to the other.
